# EUROPEAN PATENT APPLICATION

(11) **EP 3 070 822 A1**
(43) Date of publication of application: **21.09.2016**
(21) Application number: 16159362.9
(22) Date of filing: 09.03.2016
(51) Int. Cl.: H02K 9/19, H02K 1/32, H02K 7/116

(54) **LIQUID-COOLED ROTOR MOTOR ASSEMBLY**

(30) Priority: 16.03.2015 US 201562133991 P; 22.04.2015 US 201562150848 P; 23.06.2015 US 201514746865
(71) Applicant: Thunder Power Hong Kong Ltd., Central, Hong Kong (CN)
(72) Inventor: LAI, Sheng-Fu, Taoyuan City (TW)
(74) Representative: Trinks, Ole

(57) **Abstract**

A motor rotor assembly for driving an electric vehicle having a gear box includes a rotating shaft, a motor rotor mounted on the rotating shaft, and an axiallyarranged channel provided at a middle portion of the rotating shaft. The axially-arranged channel has an inlet and an outlet disposed at opposing ends of the channel. The inlet is connected with a cooling liquid source and the outlet is in fluid communication with the gear box. The cooling liquid enters the inlet from the cooling liquid source, flows through the channel, and flows out the outlet to enter the gear box.

## Description

### CROSS-REFERENCE TO RELATED APPLICATIONS

The present application claims priority to U.S. Provisional Patent Application No. 62/133,991, filed on March 16, 2015, and U.S. Provisional Patent Application No. 62/150,848, filed on April 22, 2015, the disclosures of which are hereby incorporated by reference in their entireties for all purposes.

### BACKGROUND OF THE INVENTION

Electric motors convert electrical energy into mechanical energy. When running at high speeds, electric motors lose some energy during the energy conversion in the form of heat. Such released heat raises the temperature of the electric motor and affects the energy conversion and operational efficiency of the motor. Current electric motor cooling technologies include a cooling pipeline that is arranged on a motor shell to allow flow of a cooling liquid therein to cool the stator part of the motor. However, such arrangements are poor for cooling the rotor portion that is within the stator part. Other technologies include hollowing only one end of the rotating shaft of the rotor and arranging the cooling pipeline in the rotating shaft so that the cooling effect on the rotor may be improved. Often times, however, a gear box connected with the motor needs to be cooled at the same time. In that case, a cooling pipeline needs to be provided on the outside of the gear box shell. In this arrangement, the cooling effect for the interior of the gear box is still defective. Therefore, there is a need for improved cooling infrastructure for electric motors. This application is intended to address these and other issues, and to provide related advantages.

### BRIEF SUMMARY OF THE INVENTION

The present invention relates to electric vehicle motors, and more particularly, to cooling technology for electric vehicle motors.

In one aspect, a motor rotor assembly for driving an electric vehicle having a gear box includes a rotating shaft, a motor rotor mounted on the rotating shaft, and an axially-arranged channel provided at a middle portion of the rotating shaft. The axially-arranged channel has an inlet and an outlet disposed at opposing ends of the channel. The inlet is connected with a cooling liquid source and the outlet is in fluid communication with the gear box. The cooling liquid enters the inlet from the cooling liquid source, flows through the channel, and flows out the outlet to enter the gear box.

Various embodiments of the motor rotor assembly may include one or more of the following features. The motor rotor may be mounted on an outer surface of the rotating shaft. The axially-arranged channel may define an inner surface of the rotating shaft. The inner surface of the rotating shaft may be straight and cylindrical-shaped. A flow pathway defined by the axially-arranged channel may direct the cooling liquid to flow straight through the axially-arranged channel from the inlet to the outlet. Further, an extension shaft may be disposed at the outlet of the axially-arranged channel of the rotating shaft, where the extension shaft may provide an extended flow pathway for the cooling liquid from the motor rotor assembly to the gear box. The extension shaft may be formed integrally with the rotating shaft.

Other features of the motor rotor assembly may include one or more of the following. An inner surface of the extension shaft may be straight and cylindrical-shaped to seamlessly correspond to the inner surface of the rotating shaft that defines the axially-arranged channel. At least a portion of the gear box may be operatively attached to at least a portion of the extension shaft. The extension shaft may be configured to receive a gear set mounted on an outer surface of the extension shaft. Further, the motor rotor assembly may include a shell mounted at the inlet and the outlet of the rotating shaft, where the shell is hollow to house the motor rotor assembly therein. The shell may be mounted to the rotating shaft by a pair of ball bearings disposed at the inlet and the outlet on an outer surface of the rotating shaft.

In another aspect, an electric vehicle motor for driving an electric vehicle having a gear box may include a motor stator defining a cavity therein and a motor rotor assembly housed and mounted within the cavity. The motor rotor assembly may include a rotating shaft, a motor rotor mounted onto the rotating shaft, and an axially-arranged channel defining a middle portion of the rotating shaft. The axially-arranged channel may include an inlet and an outlet positioned at opposing ends of the rotating shaft, where the inlet is connected with a cooling liquid source and the outlet is in fluid communication with the gear box. The cooling liquid may enter the inlet from the cooling liquid source, flow through the axially-arranged channel, and flow out the outlet to enter the gear box.

Various embodiments of the electric vehicle motor may include one or more of the following features. The axially-arranged channel may define a straight flow pathway from the inlet to the outlet. The outlet may engage a gear set mounted on an outer surface of the rotating shaft to directly cool the gear box with cooling liquid that leaves the motor rotor. The electric vehicle motor may include a shell having a cavity that houses the motor stator, the motor rotor assembly, and at least a portion of the rotating shaft. Further, the outlet may extend beyond a rear of the electric vehicle motor toward the gear box to provide cooling liquid to the gear box. The rotating shaft may not include a return flow pathway for returning fluid flow back to the cooling liquid source.

In another aspect, a method for cooling a motor and a gear box of an electric vehicle includes steps for operatively connecting an inlet of a hollow rotating shaft with a cooling liquid source and operatively connecting an outlet of the hollow rotating shaft with a gear box downstream of the cooling liquid source. The method may further include the step of flowing a volume of cooling liquid from the cooling liquid source through the inlet of the hollow rotating shaft to cool a motor rotor mounted on at least a portion of the hollow rotating shaft.

Further, the method may include the step of flowing the volume of cooling liquid leaving the cooled motor rotor portion of the hollow rotating shaft toward the outlet of the hollow rotating shaft to cool the gear box. The volume of cooling liquid may flow in a straight flow pathway defined by the hollow rotating shaft from a front end of the motor through a back end of the motor and a gear set of the gear box. In some embodiments, the method may further include the step of providing a return flow pathway for the cooling liquid outside of the hollow rotating shaft.

### BRIEF DESCRIPTION OF THE DRAWINGS

The present invention is described in conjunction with the appended figures:
FIG. 1 shows a sectional schematic diagram of a motor, according to various embodiments of the present invention;
FIG. 2 shows a schematic diagram of a flow route of cooling liquid, according to various embodiments of the present invention;
FIG. 3 shows another schematic diagram of a sectional structure of an example motor for an electric vehicle, according to various embodiments of the present invention;
   and
FIG. 4 shows an example block diagram for a computing system upon which various features of the present disclosure may be provided.

In the appended figures, similar components and/or features may have the same numerical reference label. Further, various components of the same type may be distinguished by following the reference label by a letter that distinguishes among the similar components and/or features. If only the first numerical reference label is used in the specification, the description is applicable to any one of the similar components and/or features having the same first numerical reference label irrespective of the letter suffix.

### DETAILED DESCRIPTION OF THE INVENTION

Various embodiments of the present invention will be described below with reference to drawings constituting a part of the description. It should be understood that, although terms representing directions are used in the present invention, such as "front", "rear", "upper", "lower", "left", "right" and the like, for describing various exemplary structural parts and elements of the present invention, these terms are used herein only for the purpose of convenience of explanation and are determined based on the exemplary orientations shown in the drawings. Since the embodiments disclosed by the present invention can be arranged according to different directions, these terms representing directions are merely used for illustration and should not be regarded as limitation. Wherever possible, the same or similar reference signs used in the present invention refer to the same components.

Environmentally friendly, energy-saving vehicles, such as new-energy electric vehicles, are a booming area in automobile development that have a broad market prospect for growth. For such electric vehicles, electric motor technology and manufacturing are key to their success. The present disclosure provides for cooling technology for such electric vehicle motors, and more specifically, provides for a liquid-cooled rotor motor assembly that may be used in new-energy electric vehicles and/or hybrid vehicles. It is noted that although applications of the present invention in electric vehicles are discussed, the present invention and/or various features thereof may be implemented across a broad variety of other industries and technologies.

In general, the present invention may provide a novel electric vehicle motor rotor structure that includes a motor rotor assembly used for driving an electric vehicle that is provided with a gear box. The motor rotor assembly may include a rotating shaft, a motor rotor mounted on the rotating shaft, and an axially arranged channel provided at the middle of the rotating shaft, where the channel is provided with an inlet and an outlet. The inlet may be connected with a cooling liquid source. The outlet may be in fluid communication with the gear box. As the cooling liquid enters the inlet from the cooling liquid source, it continues to flow through the channel and out the outlet of the channel to enter the gear box and/or continue through the gear box.

In another example, the present invention provides a novel electric vehicle motor structure that includes an electric vehicle motor used for driving an electric vehicle, where the electric vehicle is provided with a gear box. The electric vehicle motor may include a motor stator forming a cavity and a motor rotor assembly mounted in the cavity. The motor rotor assembly may include a rotating shaft, a motor rotor mounted on the rotating shaft, and an axially arranged channel at the middle portion of the rotating shaft. The channel may be provided with an inlet and an outlet, where the inlet is connected with a cooling liquid source and the outlet is in fluid communication with the gear box. The cooling liquid may enter the inlet from the cooling liquid source, flow through the channel and out the outlet to enter the gear box.

According to the motor rotor assembly and the electric vehicle motor provided by the present invention, the rotating shaft of the motor rotor is hollowed and is directly connected with the gear box so that the cooling liquid directly flows through the rotating shaft to cool the rotor in the motor at first and then cool the gear box. In addition to providing excellent cooling effects on the rotor and the gear box, this structure is further may further reduce need or complexity for a cooling pipeline layout on the outside of a motor shell, thereby providing a simple, minimal structure.

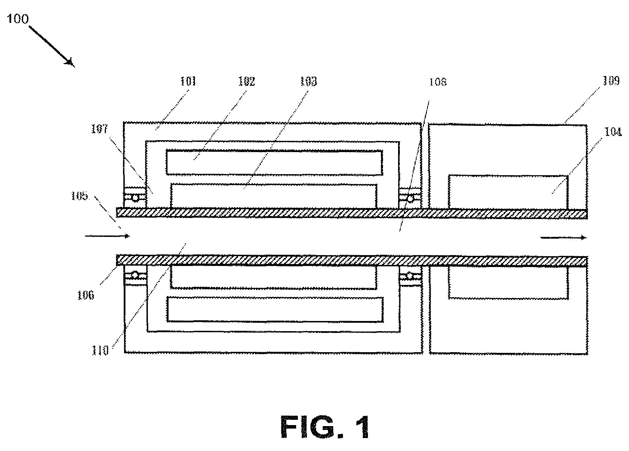

Turning now to FIG. 1, a schematic diagram of a sectional structure of a motor for an electric vehicle is provided. As shown in FIG. 1, an electric vehicle motor 100 includes a shell 101, a motor stator 102 matched with the shape of an inner cavity of the shell and arranged within the shell 101, and a cavity 107 that is formed, at least in part, in the motor stator 102. A motor rotor 103 is arranged within the inner cavity of the shell and mounted in the cavity 107 of the motor stator 102. The motor rotor 103 includes and/or is otherwise mounted on a rotating shaft 106.

In practice, after the motor 100 is energized, the motor rotor 103 rotates with the rotating shaft 106 as the rotation center. A gear set 104 is connected to one end of the rotating shaft 106, where the gear set 104 is mounted within a gear box 109. An axially arranged channel 110 is provided at the middle portion of the rotating shaft 106. The channel 110 is provided with an inlet 105 and an outlet 108 opposite to each other. The inlet 105 is connected with a cooling liquid source (not shown in the figure), and the outlet 108 is in fluid communication with the gear box 109. The cooling liquid enters the inlet 105 from the cooling liquid source, flows through the channel 110 and flows out the outlet 108 to enter the gear box 109.

Cooling the motor with this manner has the advantages that, since the rotating shaft 106 is hollowed along its axial direction, the cooling liquid directly flows through the interior of the rotating shaft 106. Compared with other designs where only one end of the rotating shaft 106 is hollowed so that cooling liquid comes in and goes out from the same end, no return cooling liquid pipeline needs to be designed in the rotating shaft 106 in the present invention. In this way, the present invention provides a simpler structure. Moreover, without return cooling liquid pipelines, the flow rate of the cooling liquid is higher through the rotating shaft 106, thereby improving the cooling effect.

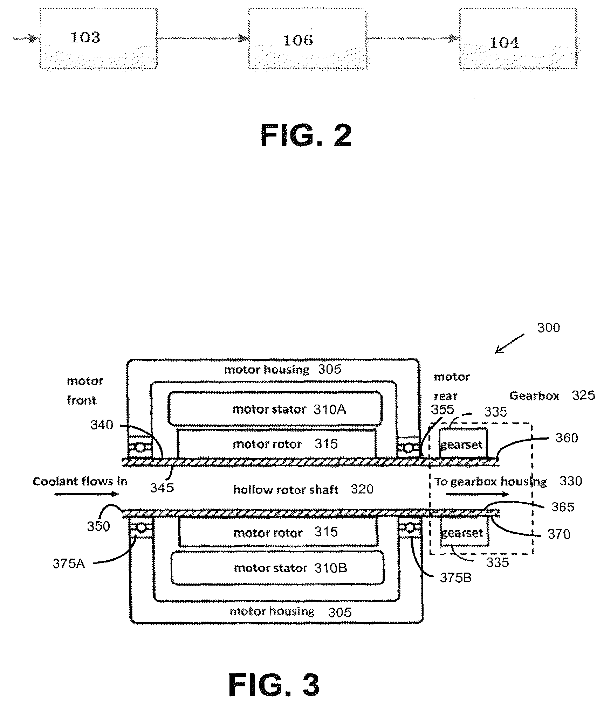

Turning now to FIG. 2, a schematic diagram showing a flow route of cooling liquid is provided. As shown in Fig. 2, the cooling liquid flows through the motor rotor 103 and since the channel 110 is directly connected with the gear box 109, the cooling liquid can then directly flow through the rotating shaft 106 into the gear set 104 to cool the gear set 104. It is noted that this schematic provides an alternative to other designs where cooling liquid is introduced into the gear box 109 by other pipelines, although additional pipelines may be used in conjunction with the present invention. Since the motor rotating shaft 106 is directly connected with the gear set 104, the cooling on the gear set 104 is more direct. For instance, the cooling liquid does not need to be introduced into the gear set 104 by a pipeline from the outside, where, in some cases, an overlong or lengthy cooling pipeline reduces effectiveness of the cooling.

Turning to FIG. 3, another schematic and cross-sectional diagram of an example motor for an electric vehicle is shown. In general, FIG. 3 illustrates an improved motor rotor cooling system for a rotor assembly design that utilizes liquid cooled motor for the electric vehicle. Motor 300 includes a motor housing 305 that houses motor stators 310A-B, motor rotor 315, and rotor shaft or rotating shaft 320. The rotating shaft 320 is hollow such that liquid coolant can flow through the rotor shaft 320 and gear set 335 to a gearbox housing 330 for cooling the motor rotor 315, gear set 335, and gearbox (not shown).

As shown in FIG. 3, motor rotor 315 may be mounted on an outer surface 340 of the rotating shaft 320. The hollow rotating shaft 320 may define an axially-arranged channel along an inner surface 345 of the rotating shaft 320 that opposes the outer surface 340. In some examples, inner surface 345 of the rotating shaft 320 is generally straight, elongate pathway through the rotating shaft without bends and/or turns that would redirect flow back toward a front end of the motor. In another example, the inner surface 345 is cylindrical-shaped from inlet 350 through the outlet 355. As further shown in FIG. 3, an extension shaft 360 is disposed at the outlet 355 of the axially-arranged channel of the rotating shaft 320. The extension shaft 360 provides an extended flow pathway for the cooling liquid from the motor rotor assembly to the gear box 325. The extension shaft 360 may be formed integrally with rotating shaft 320 and/or extend from the outlet 355 of the rotating shaft 320. Further, an inner surface 365 of the extension shaft 360 is straight and cylindrical-shaped to seamlessly correspond to the inner surface 345 of the rotating shaft 320 that defines the axially-arranged channel. In another aspect, the gear box 325 may be operatively attached or otherwise mounted on an outer surface 370 of the extension shaft 360. As further shown in FIG. 3, a shell or motor housing 305 may be mounted to the rotating shaft 320 by a pair of ball bearings 375A-B disposed at the inlet 350 and the outlet 355 on the outer surface 340 of the rotating shaft 320.

As the motor 300 converts electrical energy to kinetic energy, a portion of the converted energy is lost as heat which can reduce the optimization of the operation and efficiency of motor 300. Thus, by supplying adequate cooling to the motor 300, the motor 300 can have optimal performance. In this design the rotating shaft 320 is hollow as a cooling channel to allow coolant to flow through the rotating shaft 320 to the gearbox housing 330. Heat from the motor rotor 315 is transferred to the coolant to cool the rotor 315. By extending the rotating shaft 320 to gearbox housing 330, external cooling pipes to the gearbox can be may be reduced or eliminated.

Merely by way of example, a method for cooling the motor and gear box of the electric vehicle may include operatively connecting an inlet of a hollow rotating shaft with a cooling liquid source and/or operatively connecting an outlet of the hollow rotating shaft with a gear box downstream of the cooling liquid source.

The method may include flowing a volume of cooling liquid from the cooling liquid source through the inlet of the hollow rotating shaft to cool a motor rotor mounted on at least a portion of the hollow rotating shaft. Further, the method may include flowing the volume of cooling liquid leaving the cooled motor rotor portion of the hollow rotating shaft toward the outlet of the hollow rotating shaft to cool the gear box. The volume of cooling liquid may flow in a straight flow pathway defined by the hollow rotating shaft from a front end of the motor through a back end of the motor and a gear set of the gear box. The method may include providing a return flow pathway for the volume of cooling liquid, where the return flow pathway is disposed outside of and/or not on the hollow rotating shaft.

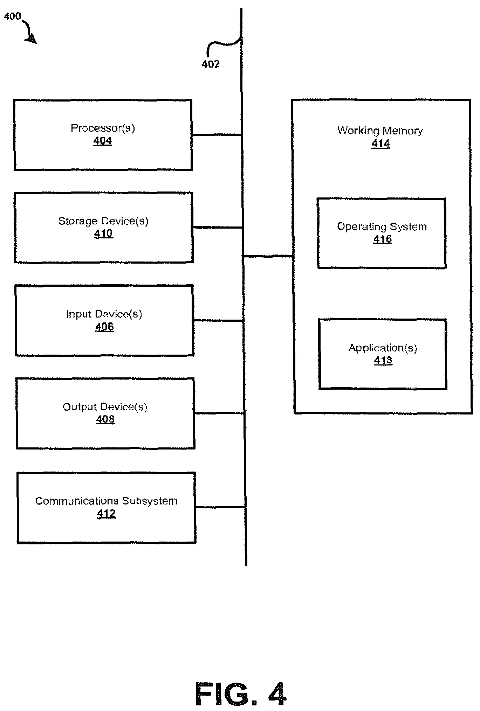

Referring now to FIG. 4, an example block diagram for a computer system or other onboard computer device 400 which may be operatively connected to the motor rotor assembly, the gear box, and/or any other components described above and provided by the electric vehicle is shown. It is contemplated that the computer system or other onboard computer device 400 may control one or more aspects of the electric vehicle and/or features described above. In some examples, the computer system or other onboard computer device 400 may include a tablet computer, personal data assistant, smartphone, gaming console, and/or a dedicated computer system for controlling the electric vehicle. Any particular one of the previously-described computing devices may be wholly or at least partially configured to exhibit features similar to the computer system 400.

The computer device 400 is shown comprising hardware elements that may be electrically coupled via a bus 402 (or may otherwise be in communication, as appropriate). The hardware elements may include a processing unit with one or more processors 404, including without limitation one or more general-purpose processors and/or one or more special-purpose processors (such as digital signal processing chips, graphics acceleration processors, and/or the like); one or more input devices 406, which may include without limitation a steering wheel, a climate control button or other user input receiving buttons, and/or the like; and one or more output devices 408, which may include without limitation a presentation device (e.g., a computer screen), a GPS, and/or the like.

The computer system 400 may further include (and/or be in communication with) one or more non-transitory storage devices 410, which may comprise, without limitation, local and/or network accessible storage, and/or may include, without limitation, a disk drive, a drive array, an optical storage device, a solid-state storage device, such as a random access memory, and/or a read-only memory, which may be programmable, flash-updateable, and/or the like. Such storage devices may be configured to implement any appropriate data stores, including without limitation, various file systems, database structures, and/or the like.

The computer device 400 might also include a communications subsystem 412, which may include without limitation a modem, a network card (wireless and/or wired), an infrared communication device, a wireless communication device and/or a chipset such as a Bluetooth^{™} device, 802.11 device, WiFi device, WiMax device, cellular communication facilities such as GSM (Global System for Mobile Communications), W-CDMA (Wideband Code Division Multiple Access), LTE (Long Term Evolution), etc., and/or the like. The communications subsystem 412 may permit data to be exchanged with a network (such as the network described below, to name one example), other computer systems, and/or any other devices described herein. In many embodiments, the computer system 400 will further comprise a working memory 414, which may include a random access memory and/or a read-only memory device, as described above.

The computer device 400 also may comprise software elements, shown as being currently located within the working memory 414, including an operating system 416, device drivers, executable libraries, and/or other code, such as one or more application programs 418, which may comprise computer programs provided by various embodiments, and/or may be designed to implement methods, and/or configure systems, provided by other embodiments, as described herein. By way of example, one or more procedures described with respect to the method(s) discussed above, and/or system components might be implemented as code and/or instructions executable by a computer (and/or a processor within a computer); in an aspect, then, such code and/or instructions may be used to configure and/or adapt a general purpose computer (or other device) to perform one or more operations in accordance with the described methods.

A set of these instructions and/or code might be stored on a non-transitory computer-readable storage medium, such as the storage device(s) 410 described above. In some cases, the storage medium might be incorporated within a computer system, such as computer system 400. In other embodiments, the storage medium might be separate from a computer system (e.g., a removable medium, such as flash memory), and/or provided in an installation package, such that the storage medium may be used to program, configure, and/or adapt a general purpose computer with the instructions/code stored thereon. These instructions might take the form of executable code, which is executable by the computer device 400 and/or might take the form of source and/or installable code, which, upon compilation and/or installation on the computer system 400 (e.g., using any of a variety of generally available compilers, installation programs, compression/decompression utilities, etc.), then takes the form of executable code.

It will be apparent that substantial variations may be made in accordance with specific requirements. For example, customized hardware might also be used, and/or particular elements might be implemented in hardware, software (including portable software, such as applets, etc.), or both. Further, connection to other computing devices such as network input/output devices may be employed.

As mentioned above, in one aspect, some embodiments may employ a computer system (such as the computer device 400) to perform methods in accordance with various embodiments of the disclosure. According to a set of embodiments, some or all of the procedures of such methods are performed by the computer system 400 in response to processor 404 executing one or more sequences of one or more instructions (which might be incorporated into the operating system 416 and/or other code, such as an application program 418) contained in the working memory 414. Such instructions may be read into the working memory 414 from another computer-readable medium, such as one or more of the storage device(s) 410. Merely by way of example, execution of the sequences of instructions contained in the working memory 414 may cause the processor(s) 404 to perform one or more procedures of the methods described herein.

The terms "machine-readable medium" and "computer-readable medium," as used herein, may refer to any non-transitory medium that participates in providing data that causes a machine to operate in a specific fashion. In an embodiment implemented using the computer device 400, various computer-readable media might be involved in providing instructions/code to processor(s) 404 for execution and/or might be used to store and/or carry such instructions/code. In many implementations, a computer-readable medium is a physical and/or tangible storage medium. Such a medium may take the form of a non-volatile media or volatile media. Non-volatile media may include, for example, optical and/or magnetic disks, such as the storage device(s) 410. Volatile media may include, without limitation, dynamic memory, such as the working memory 414.

Example forms of physical and/or tangible computer-readable media may include a floppy disk, a flexible disk, hard disk, magnetic tape, or any other magnetic medium, a compact disc, any other optical medium, ROM, RAM, and etc., any other memory chip or cartridge, or any other medium from which a computer may read instructions and/or code. Various forms of computer-readable media may be involved in carrying one or more sequences of one or more instructions to the processor(s) 404 for execution. By way of example, the instructions may initially be carried on a magnetic disk and/or optical disc of a remote computer. A remote computer might load the instructions into its dynamic memory and send the instructions as signals over a transmission medium to be received and/or executed by the computer system 400.

The communications subsystem 412 (and/or components thereof) generally will receive signals, and the bus 402 then might carry the signals (and/or the data, instructions, etc. carried by the signals) to the working memory 414, from which the processor(s) 404 retrieves and executes the instructions. The instructions received by the working memory 414 may optionally be stored on a non-transitory storage device 410 either before or after execution by the processor(s) 404.

It should further be understood that the components of computer device 400 can be distributed across a network. For example, some processing may be performed in one location using a first processor while other processing may be performed by another processor remote from the first processor. Other components of computer system 400 may be similarly distributed. As such, computer device 400 may be interpreted as a distributed computing system that performs processing in multiple locations. In some instances, computer system 400 may be interpreted as a single computing device, such as a distinct laptop, desktop computer, or the like, depending on the context.

Although the present invention has been described with reference to the specific embodiments shown in the drawings, it should be understood that the motor rotor assembly and the electric vehicle motor provided by the present invention can have a variety of variations without departing from the spirit, scope and background of the present invention. Those of ordinary skill in the art should be still aware that, parameters in the embodiments disclosed by the present invention are changed in different manners, for example, sizes, shapes, elements or types of materials, and these changes shall fall within the spirit and scope of the present invention and the claims.

The methods, systems, and devices discussed above are examples. Various configurations may omit, substitute, or add various method steps or procedures, or system components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

## Claims

1. A motor rotor assembly for driving an electric vehicle having a gear box, comprising:
- a rotating shaft;
- a motor rotor mounted on the rotating shaft; and
- an axially-arranged channel provided at a middle portion of the rotating shaft and having an inlet and an outlet disposed at opposing ends of the channel,
wherein the inlet is connected with a cooling liquid source and the outlet is in fluid communication with the gear box, further wherein the cooling liquid enters the inlet from the cooling liquid source, flows through the channel, and flows out the outlet to enter the gear box.

2. The motor rotor assembly for driving the electric vehicle having
the gear box of claim 1, wherein the motor rotor is mounted on an outer surface of the rotating shaft.

3. The motor rotor assembly for driving the electric vehicle having
the gear box of claim 1 or 2, wherein the axially-arranged channel defines an inner surface of the rotating shaft,
wherein the inner surface of the rotating shaft is straight and cylindrical-shaped.

4. The motor rotor assembly for driving the electric vehicle having the gear box of one of the preceding claims, wherein a flow pathway defined by the axially-arranged channel directs the cooling liquid to flow straight through the axially-arranged channel from the inlet to the outlet.

5. The motor rotor assembly for driving the electric vehicle having the gear box of one of the preceding claims, further comprising
an extension shaft disposed at the outlet of the axially-arranged channel of the rotating shaft, wherein the extension shaft provides an extended flow pathway for the cooling liquid from the motor rotor assembly to the gear box,
wherein an inner surface of the extension shaft is straight and cylindrical-shaped to seamlessly correspond to the inner surface of the rotating shaft that defines the axially-arranged channel.

6. The motor rotor assembly for driving the electric vehicle having the gear box of claim 5, further wherein the extension shaft is formed integrally with the rotating shaft.

7. The motor rotor assembly for driving the electric vehicle having the gear box of claim 5 or 6, wherein at least a portion of the gear box is operatively attached to at least a portion of the extension shaft.

8. The motor rotor assembly for driving the electric vehicle having the gear box of one of claims 5 to 7, wherein the extension shaft is configured to receive a gear set mounted on an outer surface of the extension shaft.

9. The motor rotor assembly for driving the electric vehicle having the gear box of one of the preceding claims, further comprising:
a shell mounted at the inlet and the outlet of the rotating shaft, wherein the shell is hollow to house the motor rotor assembly therein,
wherein the shell is mounted to the rotating shaft by a pair of ball bearings disposed at the inlet and the outlet on an outer surface of the rotating shaft.

10. An electric vehicle motor for driving an electric vehicle having a gear box, comprising:
a motor stator defining a cavity therein; and
a motor rotor assembly according to one of claims 1 to 9 housed and mounted within the cavity.

11. The electric vehicle motor for driving the electric vehicle having the gear box of claim 10, further comprising
a shell having a cavity that houses the motor stator, the motor rotor assembly, and at least a portion of the rotating shaft.

12. The electric vehicle motor for driving the electric vehicle having the gear box of claim 10 or 11, wherein the outlet extends beyond a rear of the electric vehicle motor toward the gear box to provide cooling liquid to the gear box.

13. The electric vehicle motor for driving the electric vehicle having the gear box of one of claims 10 to 12, wherein the rotating shaft does not include a return flow pathway for returning fluid flow back to the cooling liquid source.

14. A method for cooling a motor and a gear box of an electric vehicle, comprising:
operatively connecting an inlet of a hollow rotating shaft with a cooling liquid source;
operatively connecting an outlet of the hollow rotating shaft with a gear box downstream of the cooling liquid source;
flowing a volume of cooling liquid from the cooling liquid source through the inlet of the hollow rotating shaft to cool a motor rotor mounted on at least a portion of the hollow rotating shaft;
flowing the volume of cooling liquid leaving the cooled motor rotor portion of the hollow rotating shaft toward the outlet of the hollow rotating shaft to cool the gear box, wherein the volume of cooling liquid flows in a straight flow pathway defined by the hollow rotating shaft from a front end of the motor through a back end of the motor and a gear set of the gear box.

15. The method for cooling the motor and the gear box of the electric vehicle of claim 14, further comprising
providing a return flow pathway for the cooling liquid outside of the hollow rotating shaft.
